## Europäisches Patentamt
## European Patent Office
## Office européen des brevets

(19)

(11) Veröffentlichungsnummer: **0 207 361**
**B1**

(12) # EUROPÄISCHE PATENTSCHRIFT

(45) Veröffentlichungstag der Patentschrift:
04.01.89

(51) Int. Cl.⁴: **B 23 K 35/06,** B 23 K 11/06,
B 23 K 11/30

(21) Anmeldenummer: 86108273.3

(22) Anmeldetag: 18.06.86

(54) Kontaktdraht für eine Rollennahtschweissmaschine.

(30) Priorität: 01.07.85 CH 2802/85

(43) Veröffentlichungstag der Anmeldung:
07.01.87 Patentblatt 87/2

(45) Bekanntmachung des Hinweises auf die Patenterteilung:
04.01.89 Patentblatt 89/1

(84) Benannte Vertragsstaaten:
BE CH DE FR GB IT LI SE

(56) Entgegenhaltungen:
EP-A-0 059 642
EP-A-0 068 231
CH-A-595 177
DE-A-2 522 754

(73) Patentinhaber: ELPATRONIC AG, Baarerstrasse 117,
CH- 6300 Zug (CH)

(72) Erfinder: Urech, Werner, Rheingasse 28, CH- 8434
Kaiserstuhl (CH)

(74) Vertreter: Hotz, Klaus, Dipl.- El.- Ing. / ETH, c/o
SOUDRONIC AG Industriestrasse 35 Postfach 11,
CH- 8962 Bergdietikon (CH)

## Beschreibung

Die Erfindung betrifft einen Kontaktdraht für eine Rollennahtschweißmaschine, von dessen dem Schweißgut zugewandter Vorderseite und der Rollenelektrode zugewandter Rückseite wenigstens die Vorderseite mit Rillen versehen ist.

Rollennahtschweißmaschinen, bei denen ein solcher Kontaktdraht verwendbar ist, sind bekannt (CH-A-370 175 und DE-B-1 565 803). Es handelt sich dabei um Widerstands-Rollennahtschweißmaschinen, bei denen der üblicherweise aus Kupfer bestehenden Kontaktdraht verhindert, daß die Rollenelektroden, die üblicherweise ebenfalls aus Kupfer bestehen, durch die mit Zinn, Zink, Blei usw. überzogenen Bleche verschmutzt werden. Andernfalls würden nämlich beim Widerstandsschweißen von mit solchen metallischen Überzügen versehenen Stahlblechen die Rollenelektroden unter der Einwirkung der Schweißtemperaturen und der Anpreßdrücke Legierungen mit dem Überzugswerkstoff des Schweißgutes eingehen und dadurch kontaminiert werden. Durch diese Legierungsbildung würden die Schweißparameter, insbesondere die den Strom- und den Wärmedurchgang beeinflussenen Werkstoffkennwerte des Rollenelektrodenmaterials verändert und dadurch die Schweißgefügebildung beeinträchtigt werden. Dieses Problem wird dadurch beseitigt, daß zwischen dem Schweißgut und den Rollenelektroden der Kontaktdraht verwendet wird, der der Schweißstelle ständig frisch zugeführt wird. Der Kontaktdraht legiert sich mit dem kurz vor oder während der Schweißung flüssig werdenden Überzugsmetall des Bleches und verhindert dadurch, daß das freiwerdende Überzugsmetall sich mit den Rollenelektroden legiert und diese damit unbrauchbar macht. Der durch den Schweißvorgang kontaminierte Draht wird ständig wegtransportiert. Der Kontaktdraht kann dabei entweder als endlose Schlinge geführt sein und nach dem Verlassen der Schweißstelle eine Reinigungsvorrichtung durchlaufen, so daß er wiederverwendet werden kann, oder aber er wird von einer Vorratsrolle abgewickelt und nach dem Durchlaufen der Schweißstelle auf eine Aufnahmerolle aufgewickelt oder aber zerkleinert, um später eingeschmolzen zu werden. Der Kontaktdraht kann dabei die Schweißstelle zweimal durchlaufen, so daß an der Schweißstelle einmal seine Vorderseite mit den, Schweißgut und einmal seine Rückseite mit dem Schweißgut in Berührung kommt.

Der bei solchen Rollennahtschweißmaschinen versendbare Kontaktdraht hat üblicherweise einen derartigen Querschnitt, daß die Berührungsfläche zwischen dem Kontaktdraht und der Rollenelektrode größer als bei einem normalen Runddraht ist, um einen besseren Stromdurchgang und eine geringere Erwärmung zu erreichen. Für das Widerstands-Rollennahtschweißen von mit einem Schutzüberzug versehenen Stahlblechen, wie beispielsweise verzinnten oder verzinkten Blechen, ist ein Kontaktdraht der eingangs genannten Art bekannt (CH-A-595 177), der zur Erzielung eines besseren Stromdurchganges und einer geringeren Erwärmung an mindestens einer abgeflachten Seite eine in Drahtlängsrichtung abwechselnd Erhöhungen und Vertiefungen aufweisende Oberfläche besitzt, wobei diese Drahtoberfläche eine Parallelriffelung (d. h. parallele Rillen quer zur Drahtlängsrichtung) oder auch eine Kreuzriffelung aufweist. Mit der Riffelung wird bezweckt, die auf dem Kontaktdraht immer vorhandene Oxidschicht durch Verformung zu zerbrechen und örtliche Schweißstromkonzentrationen herbeizuführen.

Bei beschichteten Blechen, bei denen die Beschichtung nicht aus elektrisch gut leitendem Material, wie beispielsweise Zinn, Zink, Blei, usw., besteht, sondern aus elektrisch schlecht oder nichtleitendem Material wie z. B. Lack, Bleioxid, Wachs oder einer isolierenden starken Verschmutzung, liessen sich beim Widerstands-Rollennahtschweißen mit dem bekannten Kontaktdraht keine guten Schweißergebnisse erzielen, weil das vor dem eigentlichen Schweißvorgang teigflüssig werdende Beschichtungsmaterial (d. h. das elektrisch schlecht oder nichtleitende Material) die Rillen der Parallelriffelung oder die Poren der Kreuzriffelung verstopfen und das Eindringen der Kanten der Riffelung in das Beschichtungsmaterial zum Durchbrechen desselben verhindern würde. Im äußeren Bereich der Rillen der Parallelriffelung dürfte es zwar in begrenztem Masse zum Abführen von teigflüßigem oder verdampftem Beschichtungsmaterial kommen, nicht aber im inneren Bereich. Das Abführen solchen Materials aus den Poren der Kreuzriffelung ist überhaupt nicht möglich. Es kommt deshalb zum Aufschwimmen des Kontaktdrahtes, wodurch ein viel zu großer Kontakt-Widerstand zwischen Kontaktdraht und Blech wirksam bleibt und damit außen ein viel zu starker Strom fließt, bevor die elektrisch schlecht oder nichtleitende Beschichtung durchschlagen wird, sodaß der Kontaktdraht verbrennen kann. Grundsätzlich liegen bei einer Widerstands-Rollennahtschweißmaschine an der Schweißstelle zwischen den beiden Rollenelektroden drei Widerstände in Reihe, nämlich die beiden Kontakt-Widerstände zwischen dem Kontaktdraht und dem Blech (oder dessen Beschichtung) oberhalb bzw. unterhalb der eigentlichen Schweißstelle und der Übergangs-Widerstand zwischen den beiden zu verschweißenden Blechen an der eigentlichen Schweißstelle. Der Kontakt-Widerstand sollte jeweils möglichst klein sein, um das Verbrennen des Kontaktdrahtes und der Beschichtung an den Blechaußenseiten zu verhindern und die Blecherhitzung beim Schweißen weitgehend auf die eigentliche Schweißstelle zwischen den Blechen zu beschränken. Es liegt auf der Hand, daß diese Forderung nicht erfüllt werden kann, wenn es zum Aufschwimmen des Kontaktdrahtes auf der Beschichtung kommt.

Mit solchen Beschichtungen versehene Bleche erlangen übrigens zur Zeit steigende Bedeutung bei der Herstellung von Kraftstofftanks in der Automobilindustrie und bei der großtechnischen Fertigung von Blechrahmen, die eine äußerst dichte und definierte Schweißnaht aufweisen müssen. Aus Korrosionsschutzgründen sind solche Bleche beidseitig mehrschichtig mit Isolierschichten überzogen. Zur Herstellung von Kraftstofftanks tragen solche Bleche an der Außenseite eine Beschichtung aus Blei und Zinkstaublackfarbe und an der Innenseite eine Beschichtung aus Blei und Aluminiumstaublackfarbe und gegebenenfalls zusätzlich auf der Innen- und auf der Außenseite eine Wachsschicht. Wenn aus solchem beschichteten Blech ein Kraftstofftank hergestellt wird, werden üblicherweise zwei in der Mittelebene des Tanks einander am Tankaußenumfang überlappende Blechflansche miteinander verschweißt. Während der Schweißung ist deshalb auf der einen Seite der Schweißstelle, d. h. zum Tank hin, eine gute Wärmeabführung vorhanden, wogegen es auf der anderen Seite zur Kante hin zu einem Wärmestau kommt. Wenn beim Widerstands-Rollennahtschweißen ein zu kleiner Kantenabstand gewählt wird, erwärmt sich der außerhalb der Naht liegende Rand infolge des entstehenden Wärmestaus stärker als der innerhalb der Naht liegende Bereich. Das bewirkt ein tieferes Einsinken des Kontaktdrahtes nach außen hin und somit eine Erhöhung der quer gerichteten Kraftkomponenten. Durch die seitlich geringe Steifigkeit des schmalen Randstreifens wird die Schweißnaht ungenügend gestützt, so daß es zum Ablaufen der Naht in Richtung der Kante und zu Einkerbungen im Blech kommt. Dieser Nachteil läßt sich durch den bekannten Kontaktdraht nicht vermeiden, weil die quer zur Drahtlängsrichtung verlaufenden Rillen den Draht in Querrichtung an der Schweißstelle nicht führen können und weil beim Schweißen von beschichteten Blechen der genannten Art das Aufschwimmen des Kontaktdrahtes eine derartige Führung ohnehin vorhindern würde.

Außer dem vorstehend beschriebenen bekannten Kontaktdraht, der auf der Vorder- und auf der Rückseite flach und mit Parallelriffelung oder Kreuzriffelung versehen ist, wird bei bekannten Widerstands-Rollennahtschweißmaschinen ein sogenannter Trielliptic-Kontaktdraht verwendet, der auf der Rückseite im Querschnitt V-förmig und auf der Vorderseite ballig ist und keine Riffelung aufweist. Der Trielliptic-Kontaktdraht ergibt ebenfalls Querschub auf die Naht, und es besteht die Gefahr der Längsrißbildung auf der Nahtoberfläche. Beim Schweißen nahe neben der Blechkante sinkt dieser Kontaktdraht wegen der stärkeren Erwärmung durch den Wärmestau auf der der Blechkante zugewandten Seite der Schweißstelle tiefer in das Blech ein, wodurch der Querschub noch verstärkt wird. Durch den sehr großen und ungleichmäßigen Kontaktwiderstand zwischen Kontaktdraht und Blech entstehen Stromstärken, die bis zum Durchbruch der Bleche führen können.

Aufgabe der Erfindung ist es, einen Kontaktdraht der eingangs genannten Art so zu verbessern, daß beim Schweißen von Blechen, insbesondere von Blechen mit elektrisch schlecht oder nichtleitenden Beschichtungen oder starker Verschmutzung, das Auswandern der Naht verhindert und ein wesentlich besserer Stromübergang erzielt wird.

Diese Aufgabe ist erfindungsgemäß dadurch gelöst, daß die Rillen auf der Vorderseite in Drahtlängsrichtung ausgebildet sind.

Der Kontaktdraht nach Erfindung weist aufgrund der Längsrillen eine Vielzahl von nebeneinanderliegenden Schneidkanten oder "Messern" auf, die während des Schweißvorganges die zu verschweißenden Bleche bzw. deren Oxidschicht oder isolierende Beschichtung in Schweißrichtung aufschneiden und einen direkten Stromübergang zum Blech selbst ermöglichen. Die Rollennahtschweißmaschine arbeitet ohne Spritzerbildung, und durch den sehr kleinen und gleichmässigen Kontaktwiderstand zwischen Kontaktdraht und Blech entstehen nur Stromstärken, bei denen ein Durchbrand des Kontaktdrahtes und der Bleche unmöglich ist, und der Stromzufluß ist regelmässig und ergibt eine sehr regelmässige Schweißung. Die Schneidkanten der Längsrillen schneiden sich in die Beschichtung der Bleche ein und bilden so den zum Beginn der Stromleitung nötigen Kontakt. Bei mit Farbanstrichen (z. B. Zink- oder Aluminiumstaublacken) beschichteten Blechen wird dieser Vorgang dadurch begünstigt, daß durch den Wärmevorlauf die Farbschicht erweicht. Diese Erweichung kann zwar durch zusätzliche Maßnahmen, wie z. B. vorlaufende Schweißbrenner (autogen oder Plasma) verstärkt oder begünstigt werden, Versuche haben jedoch gezeigt, daß bei Verwendung des Kontaktdrahtes nach der Erfinddung eine Vorwärmung der Bleche nicht erforderlich ist. Die auf der Kontaktdrahtoberfläche durch die Längsprofilierung entstandenen Längskanäle erleichtern das Abführen von teigflüssigen oder verdampften Beschichtungsmaterialien, wodurch mit Sicherheit verhindert wird, daß es zum Aufschwimmen des Kontaktdrahtes kommt. Die sich in der Bewegungsrichtung des Drahtes kontinuierlich in die Beschichtung und das Blech einschneidenden Längskanten bewirken nicht nur den kleineren Kontaktwiderstand und daher den wesentlich verbesserten Stromdurchgang, sondern auch eine wesentlich verbesserte Führung des Kontaktdrahtes auf dem Blech, durch die das Ablaufen der Naht verhindert wird. Es ergeben sich dadurch nicht nur ein sehr gleichmässiger Stromverlauf und eine saubere Nahtoberfläche, sondern es kann auch mit wesentlich geringerem Abstand von der Blechkante geschweißt werden, was bei der Fertigung von Kraftstofftanks wichtig ist, da diese mit schmaleren Blechflanschen versehen werden können.

In der Ausgestaltung der Erfindung nach Anspruch 2 sind die Vorder- und die Rückseite mit in Drahtlängsrichtung ausgebildeten Rillen versehen, was einen zweimaligen Durchlauf des Kontaktdrahtes an der Ober- und Unterseite der Schweißstelle ermöglicht.

In der Ausgestaltung der Erfindung nach Anspruch 3 ist die Vorderseite des Kontaktdrahtes im Querschnitt im wesentlichen flach, ballig oder V-förmig, wobei in letzterem Fall der Scheitel der V-Form vorzugweise abgerundet ausgebildet wird. Mit allen drei Querschnittsformen lassen sich Überlappnähte oder auch Quetschnähte an Blechen, die eine starke Verschmutzung und/oder elektrisch schlecht oder nichtleitenden Beschichtungen aufweisen, mit guten Ergebnissen schweißen, wobei die besten Ergebnisse mit dem längsgerillten Kontaktdraht erzielt worden sind, dessen Vorderseite im Querschnitt flach ist.

Gleiches gilt für den Kontaktdraht in der Ausgestaltung der Erfindung nach Anspruch 4, da in diesem Fall beim zweiten Durchlauf des Kontaktdrahtes dessen Rückseite mit der Schweißstelle in Berührung gebracht wird.

Ein bevorzugter Scheitelwinkel des V-förmigen Querschnittes beträgt in der Ausgestaltung der Erfindung nach Anspruch 5 etwa 120°.

In Abhängigkeit von der zu durchschneidenden Beschichtung der Bleche können die Längskanten zwischen den Längsrillen zwar mehr oder weniger scharf sein, scharfe Längskanten gemäß der Ausgestaltung der Erfindung nach Anspruch 6 ergeben jedoch mit größerer Sicherheit den angestrebten kleineren Kontaktwiderstand und damit gleichmäßigen Stromverlauf und die angestrebte gute Führung des Kontaktdrahtes, die die Gefahr des Ablaufens der Naht verhindert.

In der Ausgestaltung der Erfindung nach Anspruch 7 beträgt die Rillenbreite 0,3 bis 0,4 mm, und zwar bei Kontaktdraht aus Kupfer mit einer Gesamtquerschnittsbreite von etwa 2,7 mm.

Der Scheitelwinkel von 90° der im Querschnitt V-förmigen Längsrillen gemäß der Ausgestaltung der Erfindung nach Anspruch 8 sorgt in Verbindung mit einer Rillentiefe von 0,15 bis 0,2 mm während des Schweißvorganges für eine besonder gute Abfuhr von teigflüßigem und verdampftem Beschichtungsmaterial und Schmutz von der Schweißstelle in den Längsrillen nach vorn.

Besonders vorteilhaft ist die Verwendung des Kontaktdrahtes nach der Erfindung in einer Rollennahtschweißmaschine zum Schweißen von Blech, insbesondere für Kraftstofftanks, das beidseitig elektrisch schlecht oder nichtleitende Beschichtungen aufweist.

Ausführungbeispiele der Erfindung werden im folgenden unter Bezugnahme auf die Zeichnungen näher beschrieben. Es zeigt

Fig. 1 als Teil einer Rollennahtschweißmaschine die Elektrodenrollen mit dem Kontaktdraht nach der Erfindung beim Schweißen eines Kraftstofftanks

Fig. 2 eine Querschnittansicht nach der Linie II - II in Fig. 1,

Fig. 3 eine Querschnittansicht nach der Linie III - III in Fig. 1,

Fig. 4 im Querschnitt einen Draht, z. B. aus Cu, der das Ausgangsmaterial zur Herstellung des Kontaktdrahtes nach der Erfindung bildet,

die Fig. 5a und 5b bevorzugte Querschnittsformen des Kontaktdrahtes nach der Erfindung,

die Fig. 6a und 6b bei dem Kontaktdraht nach der Erfindung verwendbare Formen von dessen Vorder- bzw. Rückseite,

die Fig. 7a und 7b eine Querschnitt- bzw. eine Längsschnittansicht einer mit dem Kontaktdraht nach der Erfindung gemäß Fig. 5a hergestellten Schweißung,

die Fig. 8a - 8c Oszillogramme des Schweißstromverlaufes bei Verwendung eines Trielliptic-Kontaktdrahtes ohne Längsrillen (Fig. 8a), eines Trielliptic-Kontaktdrahtes ohne Längsrillen, aber mit Vorwärmung der Naht mittels Schweißbrennern (Fig. 8b) bzw. eines Trielliptic-Kontaktdrahtes nach der Erfindung, d. h. mit Längsrillen, aber ohne Vorwärmung der Schweißnaht (Fig. 8c).

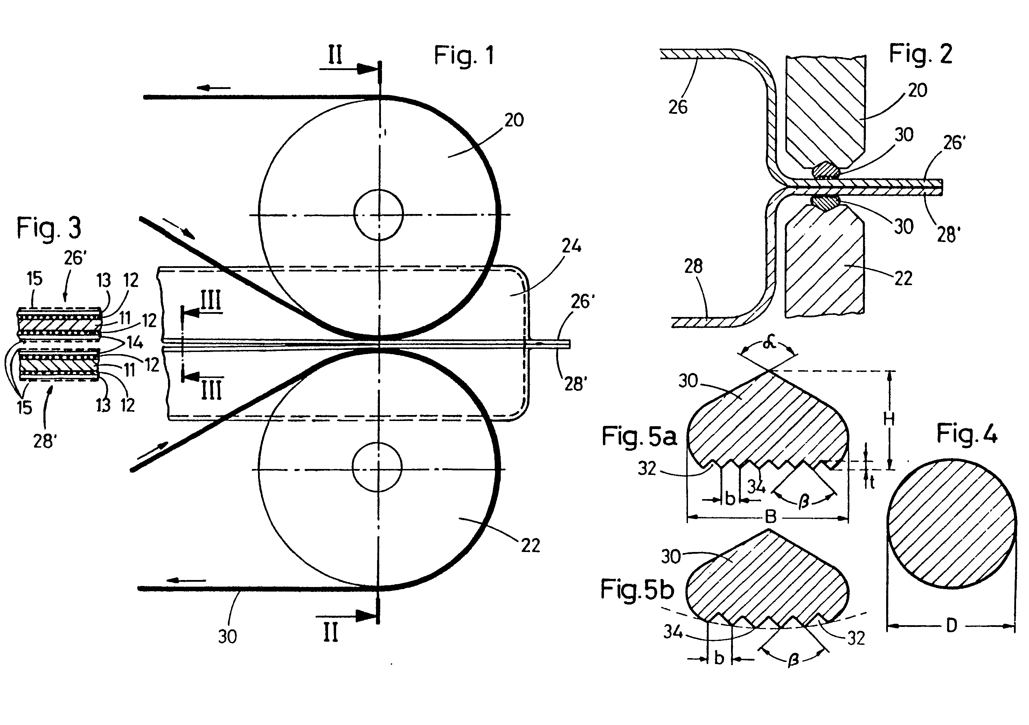

Fig. 1 zeigt einen Teil einer bekannten Widerstands-Rollennahtschweißmaschine (CH-A-370 175 oder DE-B-1 565 803), von der lediglich eine obere Rollenelektrode 20 und eine untere Rollenelektrode 22 dargestellt sind. In den dargestellten Beispiel wird ein Kraftstofftank 24 aus Blechen 26, 28 geschweißt, die den weiter unten mit Bezug auf Fig. 3 näher beschriebenen Aufbau haben. Zwischen den Rollenelektroden 20, 22 und dem Schweißgut ist jeweils ein Kontaktdraht 30 gezogen, der dem eingangs näher beschriebenen Zweck dient. Es kann sich dabei an beiden Rollenelektroden 20, 22 um denselben Kontaktdraht 30 handeln, der in zwei Durchläufen an seiner Vorder- bzw. an seiner Rückseite mit dem Schweißgut in Berührung gebracht wird, oder aber um zwei Kontaktdrähte, von denen der eine der oberen Rollenelektrode 20 und der andere der der unteren Rollenelektrode 22 zugeführt wird. Die Laufrichtung des Kontaktdrahtes ist durch Pfeile angedeutet. Die Rollenelektroden 20, 22 sind an ihrer Mantelfläche mit einem Profil versehen, das zur Rückseite des versendeten Kontaktdrahtes komplementär ist, wie es in Fig. 2 gezeigt ist. An den Blechen 26, 28 sind Flansche 26', 28' angeformt, die zwischen den Rollenelektroden 20, 22 miteinander verschweißt werden.

Fig. 3 zeigt im Querschnitt nach der Linie III - III in Fig. 1 den Aufbau der Bleche 26, 28. Das eigentliche Blech 11 ist Stahlblech mit einer Dicke von etwa 0,6 bis 1,2 mm. Jedes Blech ist auf der Innenseite und auf der Außenseite mit einer Beschichtung versehen. An der Außenseite besteht die Beschichtung jeweils aus einem Überzug 12 aus Blei, welcher einen Farbanstrich 13 aus Zinkstaublackfarbe trägt. An der Innenseite besteht die Beschichtung jeweils aus einem Überzug 12 aus Blei, welcher einen Farbanstrich 14 aus Aluminumstaublackfarbe trägt. In dem in Fig. 3 dargestellten Ausführungsbeispiel weisen die Beschichtungen an jeder Oberfläche zusätzlich einen Überzug 15 aus Wachs auf.

Fig. 4 zeigt eine Querschnittansicht eines runden Kupferdrahts mit einem Durchmesser D von 2,2 mm, aus welchem der Kontaktdraht 30 hergestellt worden ist, der am bevorzugtesten die in Fig. 5a dargestellte Querschnittsform hat. Gemäß Fig. 5a handelt es sich um einen im Querschnitt etwa dreieckigen Draht, der an seiner dem Schweißgut zugewandten Vorderseite im Querschnitt im wesentlichen flach und an seiner der Elektrodenrolle 20 oder 22 zugewandten Rückseite im Querschnitt im wesentlichen V-förmig ist, wobei der Scheitelwinkel α des V-förmigen Querschnitts in dem dargestellten Ausführungsbeispiel 120° beträgt. Der in Fig. 5a dargestellte Kontaktdraht 30 ist für einen einmaligen Durchlauf zwischen einer Rollenelektrode und dem Schweißgut vorgesehen. An seiner flachen Vorderseite ist der Kontaktdraht 30 mit Längsrillen 32 versehen. Die Längsrillen 32 sind im Querschnitt V-förmig, wobei der Scheitelwinkel β in dem dargestellten Ausführungsbeispiel 90° beträgt. Die Längsrillen können stattdessen im Querschnitt auch eine rechteckige, halbrunde, Trapez- oder andere Form haben. Wichtiger als die spezielle Querschnittsform der Längsrillen 32 sind die zwischen den Längsrillen gebildeten Kanten 34, die die Aufgabe haben, die elektrisch isolierenden oder schlecht leitenden Beschichtungen 12 (der Bleiüberzug trägt üblicherweise eine Bleioxidschicht), 13 und 15 zu durchschneiden und einen direkten Übergang des Stroms von der Rollenelektrode zu dem Blech 11 zu ermöglichen. In Abhängigkeit von den zu durchschneidenden Beschichtungen können die Längskanten zwischen den Längsrillen 32 mehr oder weniger scharf sein, besonders gute Ergebnisse werden aber auf jeden Fall mit den in Fig. 5a gezeigten scharfen Längskanten 34 erzielt. Dadurch, daß sich die Längsrillen 32 in der Bewegungsrichtung des Kontaktdrahtes 30 erstrecken, ist ein kontinuierlicher, regelmäßiger Stromübergang gewährleistet, weil sich stets dieselbe Längskante 34 kontinuierlich durch die Beschichtung hindurch in das Blech schneidet, und es wird die Gefahr des Aufschwimmens des Kontaktdrahtes vermieden, weil aus den Längsrillen 32 Schmutz, teigflüssiges und verdampftes Beschichtungsmaterial nach vorn fortlaufend abgeführt wird.

Der in Fig. 5b gezeigte Trielliptic-Draht unterscheidet sich von dem in Fig. 5a gezeigten Kontaktdraht 30 lediglich dadurch, daß seine Vorderseite ballig ausgebildet ist und daß die Längsrille 32 eine etwas größere Breite b haben. Die Rillenbreite b beträgt bei dem in Fig. 5a gezeigten Ausführungsbeispiel 0,3 mm und bei dem in Fig. 5b gezeigten Ausführungsbeispiel 0,4 mm. Die Querschnittshöhe H beträgt in beiden Fällen etwa 1,6 mm und die Qurschnittsbreite B etwa 2,7 mm. Die Rillentiefe t beträgt in beiden Fällen etwa 0,15 mm. Die Längsrillen 32 und daher die Längskanten 34 erstrecken sich parallel zur Längsrichtung des Drahtes über dessen gesamte Länge.

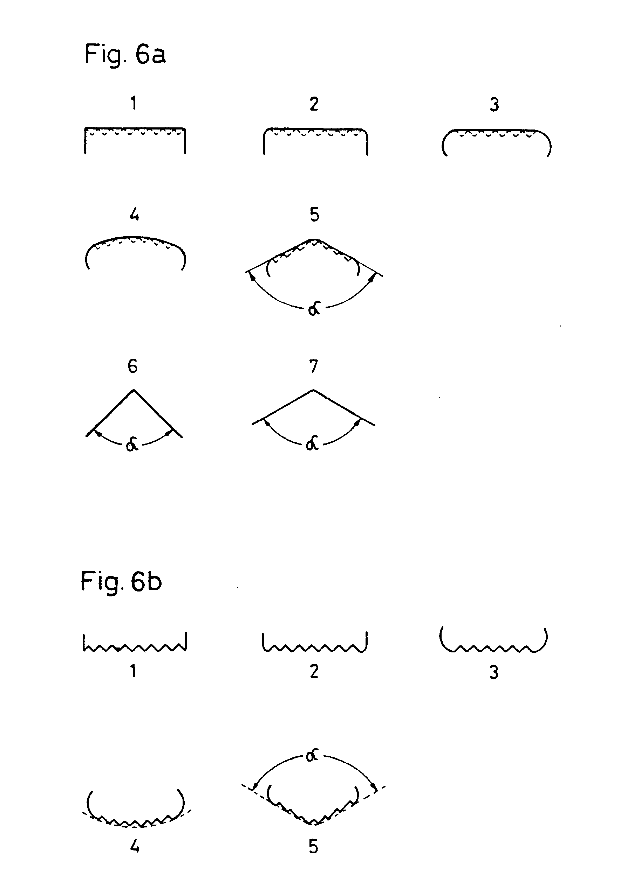

Die Fig. 6a und 6b zeigen schematische Teilquerschnittansichten der Rück- bzw. Vorderseite von Kontaktdraht, der bei der Erfindung verwendbar ist. Die Außenkontur der Rückseite ist in Fig. 6a mit ausgezogen Linien dargestellt, wogegen die an der Rückseite des Kontaktdrahts wahlweise vorhandenen oder nichtvorhandenen Längsrillen 32 mit gestrichelten Linien angedeutet sind. Den in Fig. 6a gezeigten Querschnittsformen 1 - 5 der Rückseite entsprechen die in Fig. 6b gezeigten Querschnittsformen 1 - 5 der Vorderseite. Die Querschnittsform 1 ist ein Rechteck mit scharfen Kanten, die Querschnittsform 2 ein Rechteck mit abgerundeten Kanten, die Querschnittsform 3 besteht aus einer flachen Oberfläche mit gerundeten seitlichen Flanken, die Querschnittsform 4 ist ballig, und die Querschnittsform 5 ist V-förmig, wobei der Scheitelwinkel α der V-Form 120° beträgt. Die Querschnittsformen 1 - 5 eignen sich sowohl für die Vorder- als auch für die Rückseite, sind also für Kontaktdraht geeignet, der beidseitig verwendet werden soll. Die Querschnittsformen 6 und 7 eignen sich wegen des nicht abgerundeten Scheitels der V-Form nur für die Rückseite des Kontaktdrahts und ergeben eine besonders gute Führung desselben in der Rollenelektrode 20 oder 22. Bei den Querschnittsformen 6 und 7 beträgt der Scheitelwinkel α 90° bzw. 120°. Die Querschnittsform 7 der Rückseite ergibt zusammen mit den in Fig. 6b gezeigten Querschnittsformen 3 und 4 die bevorzugten Querschnittsformen, die in den Fig. 5a bzw. 5b gezeigt sind.

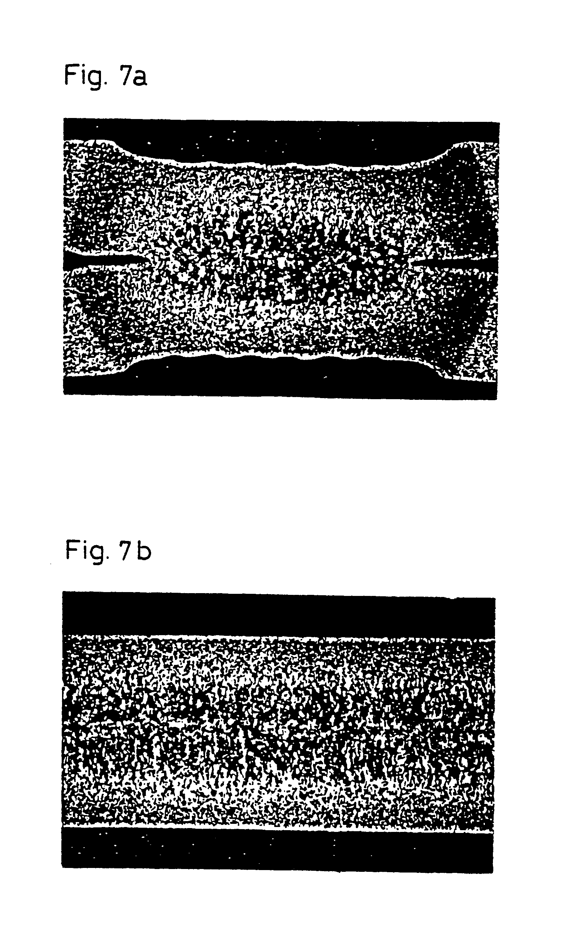

Die Fig. 7a und 7b zeigen im Querschnitt bzw. im Längsschnitt ein Schweißergebnis, das mit dem Kontaktdraht 30 nach der Erfindung erzielt worden ist. Die Beschichtung der Bleche haben dabei den in Fig. 3 gezeigten Aufbau (einschließlich der Wachsüberzüge 15). Der beim Schweißen verwendete Kontaktdraht 30 hatte die in Fig. 5a gezeigte Querschnittsform. Die Schweißdaten waren:

Vorschubsgeschwindigkeit $V_S$ = 4,8 m/min; Schweißdruck $F_{El}$ = 400 daN; Transformatorstufe: 6; Phasenanschnitt: 65 %.

Die Fig. 7a, 7b zeigen eine rissfreie Naht. Bei den Schweißversuchen war keinerlei Ablaufen der Naht zu beobachten, wenn Mindestkantenabstände von 8 bis 12 mm eingehalten wurden.

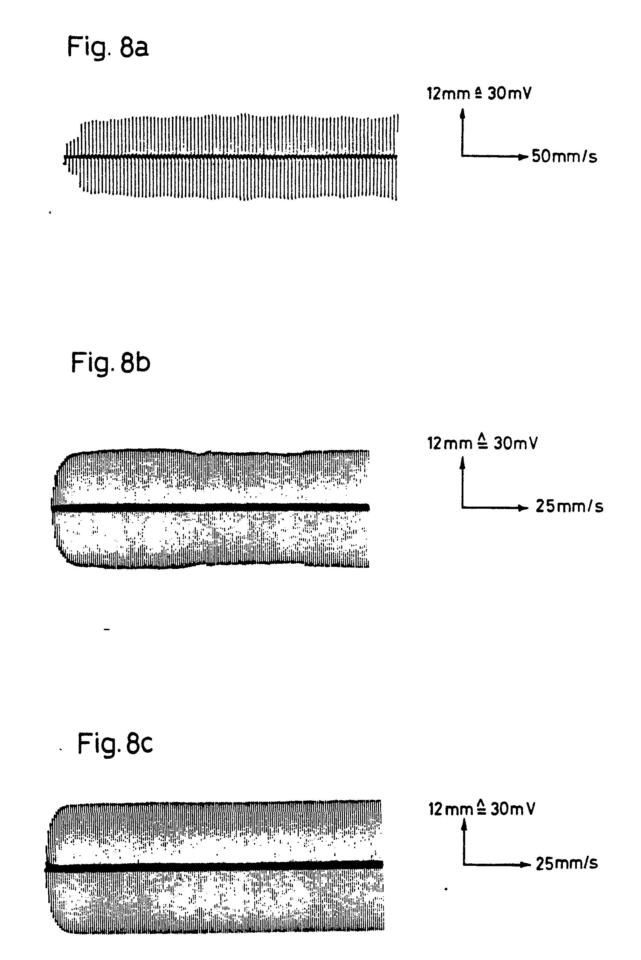

Die Fig. 8a - 8c zeigen die Ergebnisse von Vergleichsversuchen, die ebenso wie in dem mit Bezug auf die Fig. 7a und 7b beschriebenen Fall auf einen Einphasen-Wechselstrom-Rollennahtschweißmaschine durchgeführt wurden, wobei aber in den in den Fig. 8a - 8c gezeigten Fällen jeweils Bleche mit dem in Fig. 3 dargestellten Aufbau, jedoch ohne die Wachsüberzüge 15 verschweißt wurden. Im Falle der Fig. 8a - 8c wurde jeweils ein Trielliptic-Kontaktdraht der in Fig. 5b gezeigten Art verwendet, der im Falle der Fig. 8a und 8b keine Längsrillen aufwies und im Falle von Fig. 8c die in Fig. 5b gezeigte Querschnittsform mit den Längsrillen 32 hatte.

Das Schweißstromoszillogramm in Fig. 8a zeigt
- einen niedrigen Schweißstrom (der aber trotzdem eine grosse Wärmeentwicklung zwischen Blech und Kontaktdraht wegen grossen Kontaktwiderstands ergab),
- einen nervösen, unregelmäßigen Stromverlauf; und
- eine leicht verzögerte Zündung.

Die Schweißung zeigte eine überhitzte Nahtoberfläche, und es bestand Kontakdrahtbruchgefahr.

Im Falle von Fig. 8b wurde der gleiche Versuch mit dem gleichen Kontaktdraht durchgeführt, die Naht wurde aber mit Hilfe von zwei Schweißbrennern vorgewärmt. Das Schweißergebnis war gekennzeichnet durch
- ruhigen Schweißverlauf, keine Spritzerbilung;
- Schweißstrom schwankend;
- glatte Nahtoberfläche;
- keine Überhitzung des Kontaktdrahts; und
- Schweißstrom gegenüber Schweißung ohne Vorwärmen stark erhöht, wegen kleineren Kontaktwiderstands.

Der Versuch bezüglich Fig. 8c wurde mit gerilltem Trielliptic-Kontaktdraht und ohne Vorwärmung der Schweißnaht durchgeführt. Das Schweißergebnis ist gekennzeichnet druch:
- grossen Schweißstrom (wegen wesentlich kleinerem Kontaktwiderstand);
- sehr ruhigen, gleichmäßigen Stromverlauf (gegenüber Fig. 8b etwas verzögerte Zündung, aber ohne Folgen für die Schweißqualität);
- schöne Nahtoberfläche, keine Spritzer.

Die wichtige Erkenntnis aus dem Stromdiagramm in Fig. 8c ist der gleichmäßige Stromverlauf, der eine entsprechend saubere Nahtoberfläche ergibt. Das Schweißergebnis zeigt, daß bei Verwendung von gerilltem Kontaktdraht nach der Erfindung keine Vorwärmung der Bleche erforderlich ist.

Ein Vergleich der Stromdiagramme nach den Fig. 8a und 8b zeigt, daß sich auch bei Verwendung von Schweißbrennern zur Vorwärmung ein relativ stark schwankender Schweißstrom ergibt.

**Patentansprüche**

1. Kontaktdraht für eine Rollennahtschweißmaschine, von dessen dem Schweißgut zugewandter Vorderseite und der Rollenelektrode zugewandter Rückseite wenigstens die Vorderseite mit Rillen versehen ist,
dadurch gekennzeichnet, daß die Rillen (32) auf der Vorderseite in Drahtlängsrichtung ausgebildet sind.

2. Kontaktdraht nach Anspruch 1, dadurch gekennzeichnet, daß die Vorder- und die Rückseite mit in Drahtlängsrichtung ausgebildeten Rillen (32) versehen sind.

3. Kontaktdraht nnch Anspruch 1 oder 2, dadurch gekennzeichnet, daß die Vorderseite im Querschnitt im wesentlichen flach, ballig oder V-förmig ist.

4. Kontaktdraht nach einem der Ansprüche 1 bis 3, dadurch gekennzeichnet, daß die Rückseite im Querschnitt im wesentlichen flach, ballig oder V-förmig ist.

5. Kontaktdraht nach Anspruch 4, dadurch gekennzeichnet, daß der Scheitelwinkel ($\alpha$) des V-förmigen Querschnitts 120° beträgt.

6. Kontaktdraht nach einem der Ansprüche 1 bis 5, dadurch gekennzeichnet, daß die Längsrillen (32) durch scharfe Längskanten (34) begrenzt sind.

7. Kontaktdraht nach einem der Ansprüche 1 bis 6, dadurch gekennzeichnet, daß die quer zur Drahtlängsrichtung zwischen benachbarten Längskanten (34) gemessene Rillenbreite (b) 0,3 bis 0,4 mm beträgt.

8. Kontaktdraht nach einem der Ansprüche 1 bis 7, dadurch gekennzeichnet, daß die Längsrillen (32) im Querschnitt V-förmig sind, einen Scheitelwinkel ($\beta$) von 90° und eine Tiefe (t) von 0,15 - 0,2 mm haben.

9. Verwendung des Kontaktdrahts nach einem der Ansprüche 1 bis 8 in einer Rollennahtschweißmaschine zum Schweißen von Blech (11), insbesondere für Kraftstofftanks (24), das beidseitig elektrisch schlecht oder nichtleitende Beschichtungen (12, 13, 14, 15) aufweist.

**Claims**

1. Contact wire for a roller seam welding machine, wherein, of the front adjacent to the work to be welded and the back adjacent to the roller electrode, at least the front is provided with grooves, characterised in that the grooves (32) at the front are formed in the longitudinal direction of the wire.

2. Contact wire as claimed in claim 1, characterised in that the front and the back are provided with grooves (32) formed in the longitudinal direction of the wire.

3. Contact wire as claimed in claim 1 or 2, characterised in that the front is substantially flat, rounded or V-shaped in cross-section.

4. Contact wire as claimed in one of the claims 1 to 3, characterised in that the back is substantially flat, rounded or V-shaped in cross-section.

5. Contact wire as claimed in claim 4, characterised in that the vertex angle ($\alpha$) of the V-shaped cross-section is 120°.

6. Contact wire as claimed in one of the claims 1 to 5, characterised in that the longitudinal grooves (32) are bounded by sharp longitudinal edges (34).

7. Contact wire as claimed in one of the claims 1 to 6, characterised in that the groove width (b), measured transversely to the longitudinal direction of the wire between adjacent longitudinal edges (34) is 0.3 to 0.4 mm.

8. Contact wire as claimed in one of the claims 1 to 7, characterised in that the longitudinal grooves (32) are V-shaped in cross-section and have a vertex angle ($\beta$) of 90° and a depth (t) of 0.15 - 0.2 mm.

9. Use of the contact wire as claimed in one of the claims 1 to 8 in a roller seam welding machine for welding sheet metal (11), particularly for fuel tanks (24), which comprises coatings (12, 13, 14, 15) at both sides which are poor electrical conductors or are electrically non-conducting.

**Revendications**

1. Fil de contact pour une machine de soudage à la molette, comportant une face avant tournée vers l'article à souder et une face arrière tournée vers l'électrode en forme de molette et dont au moins la face avant comporte des rainures, caractérisé en ce que les rainures (32) situées dans la face avant s'étendent dans la direction longitudinale du fil.

2. Fil de contact selon la revendication 1, caractérisé en ce que la face avant et la face arrière comportent des rainures (32) disposées dans la direction longitudinale du fil.

3. Fil de contact selon la revendication 1 ou 2, caractérisé en ce que la face avant possède, en coupe transversale, une forme sensiblement plane, convexe ou en V.

4. Fil de contact selon l'une des revendications 1 à 3, caractérisé en ce que la face arrière possède, en coupe transversale, une forme sensiblement plane, convexe ou en V.

5. Fil de contact selon la revendication 4, caractérisé en ce que l'angle sommet ($\alpha$) de la section transversale en forme de V est égal à 120°.

6. Fil de contact selon l'une des revendications 1 à 5, caractérisé en ce que les rainures longitudinales (32) sont limitées par des arêtes vives longitudinales (34).

7. Fil de contact selon l'une des revendications 1 à 6, caractérisé en ce que la largeur (b) des rainures, mesurée transversalement par rapport à la direction longitudinale du fil entre des arêtes longitudinales (34) voisines, est comprise entre 0,3 et 0,4 mm.

8. Fil de contact selon l'une des revendications 1 à 7, caractérisé en ce que les rainures longitudinales (32) possèdent, en coupe transversale, la forme d'un V, un angle sommet ($\beta$) égal à 90° et une profondeur (t) comprise entre 0,15 et 0,2 mm.

9. Utilisation du fil de contact suivant l'une des revendications 1 à 8 dans une machine de soudage à la molette pour réaliser le soudage d'une tôle (11), notamment pour un réservoir de carburant (24), qui possède, sur ses deux faces, des revêtements (12, 13, 14, 15) mauvais conducteurs ou non conducteurs de l'électricité.

Fig. 6a

1                 2                 3

4                 5

6                 7

Fig. 6b

1                 2                 3

4                 5

Fig. 7a

Fig. 7b

Fig. 8a

12mm ≙ 30mV

50mm/s

Fig. 8b

12mm ≙ 30mV

25mm/s

Fig. 8c

12mm ≙ 30mV

25mm/s